(19) Europäisches Patentamt
European Patent Office
Office européen des brevets

(11) EP 1 317 463 B1

(12) # EUROPÄISCHE PATENTSCHRIFT

(45) Veröffentlichungstag und Bekanntmachung des Hinweises auf die Patenterteilung:
**23.03.2005 Patentblatt 2005/12**

(21) Anmeldenummer: **01967334.2**

(22) Anmeldetag: **12.09.2001**

(51) Int Cl.[7]: **C07F 7/12**, C04B 35/58

(86) Internationale Anmeldenummer:
**PCT/EP2001/010540**

(87) Internationale Veröffentlichungsnummer:
**WO 2002/022625 (21.03.2002 Gazette 2002/12)**

(54) **HOCHTEMPERATURSTABILE SILICIUMBORCARBIDNITRIDKERAMIKEN AUS SILYLALKYLBORAZINEN, VERFAHREN ZU DEREN HERSTELLUNG SOWIE DEREN VERWENDUNG**

HIGH TEMPERATURE-STABILE SILICON BORON CARBIDE NITRIDE CERAMICS COMPRISED OF SILYLALKYL BORAZINES, METHOD FOR THE PRODUCTION THEREOF, AND THEIR USE

CERAMIQUES DE NITRURE DE CARBURE DE BORE ET DE SILICIUM, STABLES A HAUTE TEMPERATURE, A BASE DE SILYLALKYLBORAZINES, LEUR PROCEDE DE PREPARATION ET LEUR UTILISATION

(84) Benannte Vertragsstaaten:
**AT BE CH CY DE DK ES FI FR GB GR IE IT LI LU MC NL PT SE TR**

(30) Priorität: **12.09.2000 DE 10045050**
**20.02.2001 DE 10108069**

(43) Veröffentlichungstag der Anmeldung:
**11.06.2003 Patentblatt 2003/24**

(73) Patentinhaber: **Max-Planck-Gesellschaft zur Förderung der Wissenschaften e.V.**
**80539 München (DE)**

(72) Erfinder:
- **JANSEN, Martin**
  **71229 Leonberg (DE)**
- **JÄSCHKE, Thomas**
  **70195 Stuttgart (DE)**

(74) Vertreter: **Dey, Michael, Dr. et al**
**Weickmann & Weickmann,**
**Patentanwälte,**
**Postfach 86 08 20**
**81635 München (DE)**

(56) Entgegenhaltungen:
**WO-A-01/53304** **WO-A-98/45302**
**WO-A-98/45303** **DE-A- 3 444 306**

- **KIESGEN, JUTTA ET AL: "A further contribution to the stabilization of iminoboranes RB.tplbond.NR'" CHEM. BER., Bd. 126, Nr. 7, 1993, Seiten 1559-1563, XP001030914**

EP 1 317 463 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Herstellung von Silylalkylboranen mit dem Strukturmerkmal Si-C-B, neue molekulare Silylalkylborane, neue molekulare Silylalkylborazine, neue Oligo- und Polyborocarbosilazane, ein Verfahren zu deren Herstellung und deren Verwendung sowie kohlenstoffreiche Siliciumborcarbidnitridkeramiken und ein Verfahren zu deren Herstellung.

Die Herstellung nichtoxidischer multinärer Keramiken über die Vernetzung molekularer Vorläufer ist von herausragender Bedeutung. Keramische Materialien hoher Reinheit und mit einer homogenen Elementverteilung auf atomarer Ebene lassen sich derzeit nur über diesen Weg herstellen. Über herkömmliche Synthesewege, wie z.B. Festkörperreaktion, sind solche Materialien nicht zugänglich.

Besondere Bedeutung haben die Nitrid- und Carbidnitrid-Keramiken mit Bor und Silicium erlangt. Sie besitzen eine hohe thermische Stabilität und Oxidationsbeständigkeit und zeigen eine ausgeprägte Kristallisationshemmung. Die thermische Beständigkeit der Keramiken in diesem quaternären System läßt sich durch den zusätzlichen Einbau von Kohlenstoff in das keramische Netzwerk erhöhen. Solche Materialien sind hervorragend für den Hochtemperatureinsatz unter atmosphärischen Bedingungen geeignet und können als Bulkmaterial, als keramische Fasern in Verbundwerkstoffen, in Form von Beschichtungen zur Anwendung kommen oder für Mikrostrukturverfahren eingesetzt werden.

In Patent DE 4 107 108 A1 wird die Synthese des Einkomponentenvorläufers Trichlorsilylaminodichlorboran (TADB, $Cl_3Si\text{-}NH\text{-}BCl_2$) beschrieben, der nach Vernetzung mit Methylamin und anschließender Pyrolyse im Inertgasstrom zu einer Keramik der ungefähren Zusammensetzung $SiBN_3C$ führt. Der darin enthaltene Kohlenstoff stammt aus der Methylgruppe des Vernetzungsreagenz Methylamin.

Ein Nachteil dieses Verfahrens liegt in der geringen Variationsmöglichkeit des Kohlenstoffgehalts, der hier nur durch eine längere Alkylgruppe im Vernetzungsreagenz gesteuert werden kann. Diese Alkylgruppe geht jedoch während der Pyrolyse in Form von flüchtigen Kohlenwasserstoffen verloren oder führt zu unerwünschten Graphitausscheidungen in der Keramik.

Das Patent W098/45302 beschreibt die Herstellung kohlenstoffreicher Keramiken im Si/B/N/C-System aus einem Einkomponentenvorläufer, der eine verzweigte Kohlenstoffbrücke zwischen den Elementen Bor und Silicium besitzt. Auf diese Weise lassen sich kohlenstoffreichere Keramiken synthetisieren. Ein Nachteil dieses Verfahrens ist, dass die Einkomponentenvorläufer eine Alkylgruppe an der Kohlenstoffbrücke aufweisen, die bei der Pyrolyse in Form von flüchtigen Kohlenwasserstoffen verloren gehen kann.

In WO 98/45303 werden Silylalkylborane beschrieben, die mit einem Sulfid oder Amin komplexiert sind. Ihre Synthese beruht auf der Hydroborierung eines Halogenalkensilans, sodass nur Verbindungen mit einer verzweigten Kohlenstoffbrücke zwischen B und Si erhalten werden können.

In dem Patent DE 34 44 306 werden Bor-Silicium-organische Polymere offenbart, die durch Umsetzung einer Silicium-organischen Verbindung mit einer Bor-organischen Verbindung erhalten werden. Die Möglichkeit einer Synthese aus Einkomponenten-Vorläufern wird jedoch nicht angesprochen.

Aus Kiesgen et al. (Chem. Ber. 126, 7, 1993, S. 1559 - 1563) sind Silylalkylborazine bekannt, die durch Cyclotrimerisierung von Iminoboranen erhältlich sind.

Eine Aufgabe der vorliegenden Erfindung war die Bereitstellung eines einfachen Verfahrens, das Einkomponentenvorläufer in hohen Ausbeuten liefert und die Nachteile des Standes der Technik nicht aufweist. Insbesondere sollen durch das Verfahren auch Vorläuferverbindungen ohne verzweigte Alkylgruppen zugänglich sein, die dann zu amorphen oder teilkristallinen kohlenstoffreichen Keramiken weiterverarbeitet werden können.

Eine weitere Aufgabe bestand darin, amorphe Si/B/N/C-Keramiken mit verbesserter Hochtemperatur- und Oxidationsbeständigkeit bereitzustellen.

Diese Aufgabe wird erfindungsgemäß gelöst durch ein Verfahren zur Herstellung einer Verbindung der Formel (I):

$$(R)_3Si - C (R^1) (R^2) - B (R)_2 \qquad (I)$$

worin R jeweils unabhängig einen Kohlenwasserstoff mit 1 bis 20 C-Atomen, Wasserstoff, Halogen, NR'R" oder OR' darstellt, wobei R' und R" unabhängig voneinander Wasserstoff oder einen Kohlenwasserstoff mit 1 bis 20 C-Atomen bedeuten und

$R^1$ und $R^2$ Wasserstoff darstellen, wobei R' und R" unabhängig voneinander Wasserstoff oder einen Kohlenwasserstoff mit 1 bis 20 C-Atomen darstellen.

Bei dem erfindungsgemäßen Verfahren wird ein Silan der allgemeinen Formel (II)

$$(R)_3Si - C (R^1) (R^2) - X \quad (II)$$

worin X Halogen bedeutet, mit einem Metall M, z.B einem Alkalimetall wie Na, K und insbesondere Li, einem Erdalkalimetall, insbesondere Mg, oder einem Übergangsmetall wie etwa Cu, Zn, Cd, Hg umgesetzt. Die Reaktion erfolgt bei Temperaturen, bei denen im Wesentlichen keine Polymerisation stattfindet, d.h. unterhalb 50 °C und besonders bevorzugt zwischen 0 °C und 15 °C, in einem aprotischen organischen Lösemittel und liefert ein Silan der allgemeinen Formel (III)

$$(R)_3Si - C (R^1) (R^2) - M (X)_w \quad (III)$$

wobei w = 0 ist, wenn M ein einwertiges Metall ist, und
wobei w eine ganze Zahl ≥ 1 entsprechend der Wertigkeitsstufe von M minus 1 ist, wenn M ein mehrwertiges Metall ist.

Wie in dieser Anmeldung verwendet, können der Rest R, R' und R" jeweils unabhängig einen Kohlenwasserstoffrest mit 1 bis 20 C-Atomen, vorzugsweise mit 1 bis 10 C-Atomen bedeuten. Ein Kohlenwasserstoffrest ist ein Rest, der aus den Elementen Kohlenstoff und Wasserstoff gebildet ist. Erfindungsgemäß kann der Kohlenwasserstoffrest verzweigt oder unverzweigt, gesättigt oder ungesättigt sein. Der Kohlenwasserstoffrest kann auch aromatische Gruppen enthalten, die wiederum mit Kohlenwasserstoffresten substituiert sein können. Beispiele für bevorzugte Kohlenwasserstoffreste sind z.B. unverzweigte gesättigte Kohlenwasserstoffreste, wie etwa $C_1$ bis $C_{20}$-Alkyl, insbesondere Methyl, Ethyl, n-Propyl, n-Butyl, n-Pentyl, n-Hexyl, n-Heptyl, n-Octyl, n-Nonyl und n-Decyl. Bei den Resten R kann es sich aber auch um verzweigte gesättigte Kohlenwasserstoffe, insbesondere verzweigte $C_1$ bis $C_{20}$-Alkyle handeln, wie etwa i-Propyl, i-Butyl, t-Butyl, sowie weitere verzweigte Alkylreste. In einer weiteren bevorzugten Ausführungsform umfasst der Rest R eine oder mehrere olefinisch ungesättigte Gruppen. Beispiele für solche Reste sind Vinyl, Allyl, Butenyl, Pentenyl, Hexenyl, Heptenyl, Octenyl, Nonenyl, Decenyl, Butadienyl, Pentadienyl, Hexadienyl, Heptadienyl, Octadienyl, Nonadeinyl und Decadienyl. Der Rest R kann auch eine Alkingruppe, also eine C ≡ C-Bindung enthalten. In einer weiteren bevorzugten Ausführungsform enthält mindestens ein Rest R und bevorzugt alle Reste R eine aromatische Gruppe, insbesondere einen aromatischen Rest mit 5 oder 6 C-Atomen, wie etwa eine Phenylgruppe oder eine mit einem Kohlenwasserstoff substituierte Phenylgruppe, wie etwa Methylphenyl, Dimethylphenyl, Trimethylphenyl, Ethylphenyl, oder Propylphenyl. Einschließlich der Substituenten umfasst der aromatische Rest bevorzugt von 5 bis 20, insbesondere bis 10 C-Atome. Die Kohlenwasserstoffreste R, $R^1$, $R^2$, R' und R" können dabei jeweils unabhängig voneinander variiert werden.

Besonders bevorzugt umfasst mindestens ein Rest R, R' oder/und R" und insbesondere alle Reste R, R' und/oder R" eine $C_1$ bis $C_{20}$-Alkylgruppe, insbesondere eine $C_1$-$C_6$-Alkylgruppe, eine Phenylgruppe, eine Vinylgruppe oder eine Allylgruppe oder einen Kohlenwasserstoffrest mit 1 bis 3 C-Atomen, insbesondere Methyl, Ethyl oder Propyl und am meisten bevorzugt Methyl.

Der Rest Hal steht für ein Halogenatom und bedeutet insbesondere Cl, Br oder I, wobei es bevorzugt ist, dass mindestens ein Rest Hal und bevorzugt alle Reste Hal Cl bedeuten.

Die Verbindung (III) kann einerseits wie oben beschrieben direkt aus einer Verbindung der Formel (II) mit einem Metall hergestellt werden, wenn ein Metall mit ausreichender Reaktivität eingesetzt wird, z.B. Li, Na, K, Mg, Cu, Zn, Cd, Hg. Andererseits kann die Verbindung (III), worin M ein Metall ist, das nicht ausreichend reaktiv für eine effiziente direkte Alkylierung ist, z.B. Sn, auch in zwei Stufen hergestellt werden. In der ersten Stufe wird eine Verbindung (III) mit einem direkt reaktiven Metall erzeugt, die dann in einer zweiten Stufe mit dem nicht direkt reaktiven Metall "ummetalliert wird". Das Metall kann zum Beispiel in Form von Metallspänen oder bevorzugt als Pulver eingesetzt werden.

Anschließend wird die Verbindung der allgemeinen Formel (III) bei Temperaturen unterhalb 50 °C und bevorzugt bei Temperaturen zwischen -50° C und 0 °C mit einem Boran der allgemeinen Formel

$$Y - B (R)_2$$

wobei R wie oben definiert ist und Y Halogen, NR'R" oder OR' darstellt,
wobei R' und R" unabhängig voneinander Wasserstoff oder einen Kohlenwasserstoff mit 1 bis 20 C-Atomen bedeutet, umgesetzt.

Es ist auch möglich, den Silylalkylrest der Formel (III) zunächst auf ein anderes Metall zu übertragen und dann die Umsetzung mit dem Boran durchzuführen.

In einer bevorzugten Ausführungsform des Verfahrens wird eine Chlormethyl-Silanverbindung der Formel

$$(R)_3Si - CH_2Cl$$

wobei R jeweils unabhängig die für das allgemeine Verfahren angegebenen Bedeutungen haben kann, in einer Grignard-Reaktion mit Magnesium-Pulver metalliert und anschließend mit dem Halogenboran umgesetzt.

Die Metallierung der Chlormethyl-alkylchlorsilane der allgemeinen Formel $(R_n)(Cl_{3-n})Si(CH_2Cl)$ mit n = 0;1;2; 3; R = $C_1$-$C_6$ Alkyl, Vinyl, Phenyl, Wasserstoff, Halogen, Alkylaminogruppen N(R')(R"), Alkyloxygruppen OR' mit R', R" unabhängig voneinander $C_1$-$C_6$-Alkyl, Vinyl, Phenyl, Wasserstoff oder Halogen kann z.B. in Diethylether oder Tetrahydrofuran erfolgen.

Bevorzugt wird das Silan der allgemeinen Formel (III) mit mindestens einem Alkyloxychlorboran $YB(R^3)(R^{3'})$ umgesetzt, worin Y Cl bedeutet und $R^3$ und $R^{3'}$ unabhängig voneinander einen $C_1$-$C_{20}$-Alkoxy- oder Phenyloxyrest darstellen.

Die beim erfindungsgemäßen Verfahren eingesetzten Halogenborane $YB(R^3)(R^{3'})$ sind besonders bevorzugt Alkoxychlorborane mit Y = Cl, Br und $R^3$, $R^{3'}$ unabhängig voneinander $C_1$-$C_6$-Alkoxy- oder Phenyloxy-Resten.

Ein weiterer Gegenstand der vorliegenden Erfindung ist daher die Umsetzung einer Verbindung der allgemeinen Formel (V)

$$(R)_3Si - C (R^1) (R^2) - B (OR') (OR'') \qquad (V)$$

mit einem Elementhalogenid oder einem organischen Säurehalogenid.

Dabei entsteht eine Verbindung der allgemeinen Formel (IV)

$$(R)_3Si - C (R^1) (R^2) - B X_2 \qquad (IV)$$

Dabei sind $R^1$ und $R^2$ jeweils Wasserstoff und R stellt jeweils unabhängig Wasserstoff, Halogen, einen Kohlenwasserstoffrest mit 1 bis 20 C-Atomen, einen Rest N(R')(R") oder einen Rest OR' dar, worin R" und R' unabhängig voneinander Wasserstoff oder einen Kohlenwasserstoffrest mit 1 bis 20 C-Atomen dar, und X Halogen bedeutet.

Bevorzugt bedeuten $R^1$ und $R^2$ jeweils unabhängig voneinander entweder Wasserstoff oder Halogen.

In einer bevorzugten Ausführungsform des erfindungsgemäßen Verfahrens werden die Zwischenprodukte $(R)_3Si - C (R^1) (R^2) - B(OR') (OR'')$ ohne vorhergehende Abtrennung aus dem Reaktionsgemisch mit Elementchloriden oder organischen Säurehalogeniden und insbesondere mit Bortrihalogeniden zu

$$(R)_3Si - C (R^1) (R^2) - B X_2 \qquad (IV)$$

umgesetzt, was den präparativen Aufwand erheblich reduziert.

In einer bevorzugten Ausführungsform wird die Grignard-Reaktion unter Anwendung des Verdünnungsprinzips bei Temperaturen unterhalb 50 °C in einem aprotischen, organischen Lösemittel, das z.B. ein acyclischer oder cyclischer Ether oder ein $C_5$-$C_8$-Alkan sein kann, durchgeführt.

Zur Isolierung der reinen Substanzen wird das Lösemittel destillativ entfernt und das Produkt entweder bei vermindertem Druck fraktionierend destilliert oder durch Umkristallisation gereinigt. Andere Reinigungsmethoden, wie z.B. die Hochleistungsflüssigchromatographie (HPLC) können ebenfalls verwendet werden.

Mit dem erfindungsgemäßen Verfahren sind z.B. auch Silylalkylborane der Formel (I) zugänglich, die nicht nach dem Verfahren der W098/45302 hergestellt werden können.

Ein weiterer Gegenstand der Erfindung sind daher Silylalkylborane der Formel (I)

$$(R)_3Si - C (R^1) (R^2) - B(R)_2 \qquad (I)$$

worin R jeweils unabhängig voneinander Wasserstoff, Halogen, einen Kohlenwasserstoffrest mit 1 bis 20 C-Atomen, N(R')(R") oder OR' bedeutet, worin R' und R" jeweils unabhängig Wasserstoff oder einen Kohlenwasserstoffrest mit 1 bis 20 C-Atomen darstellt, und $R^1$ und $R^2$ jeweils Wasserstoff bedeutet.

Bevorzugt ist R für jedes Auftreten unabhängig $C_1$-$C_6$-Alkyl, Vinyl, Phenyl, Wasserstoff, Halogen, Organylaminogruppen N(R')(R"), Organyloxygruppen OR' mit R', R" unabhängig voneinander $C_1$-$C_6$-Alkyl, Vinyl, Phenyl oder Wasserstoff.

Bevorzugt wird Silylalkylboran der Formel (I), wobei wenigstens einer der Reste R Methyl oder/und Cl darstellt.

Besonders bevorzugt sind R für jedes Auftreten unabhängig Cl und/oder $CH_3$.

Besonders bevorzugte Ausführungsformen der erfindungsgemäßen Silylalkylborane der Formel (I) sind Verbindungen, in denen an das Si ein Halogen und zwei Kohlenwasserstoffreste oder zwei Halogene und ein Kohlenwasserstoffrest gebunden sind. Solche Verbindungen enthalten ein oder zwei Kohlenwasserstoffreste am Si-Atom, wodurch der Kohlenstoffgehalt einer aus solchen Verbindungen hergestellten Keramik weiter erhöht werden kann. Weiterhin haben solche Verbindungen einen verminderten Anteil an zur Oligomerisierung bzw. Polymerisierung reaktiven Halogenatomen. Dadurch können Oligomere bzw. Polymere mit einem niedrigen Vernetzungsgrad, insbesondere Polymere, die im Wesentlichen linear aufgebaut sind, hergestellt werden. Weiterhin sind Verbindungen der Formel (I) bevorzugt, bei denen am Boratom zwei Halogenatome oder ein Halogenatom und ein Kohlenwasserstoffrest gebunden sind.

Mit Einkomponentenvorläufern dieses Typs, bei denen Bor und Silicium über eine Brücke $C(R^1)(R^2)$ verknüpft sind, lassen sich Polymere herstellen, bei denen Kohlenstoff unabhängig vom Vernetzungsgrad bereits ein fester Bestandteil des Polymers ist. Damit ist der Einbau von Kohlenstoff in das keramische Netzwerk begünstigt und die Abspaltung flüchtiger kohlenstoffhaltiger Verbindungen während der Pyrolyse wird drastisch reduziert. Der C-Anteil in der Keramik läßt sich durch die Wahl eines geeigneten Vernetzungsreagens in weiten Grenzen variieren, wodurch das Eigenschaftsspektrum der Keramiken gezielt den Anforderungen angepasst werden kann. Auf diese Weise hergestellte Keramiken besitzen ausgezeichnete Hochtemperatur- und Oxidationsbeständigkeiten.

Die als Ausgangsprodukte eingesetzten Silane sind wie die Bortrihalogenide kommerziell erhältlich. Das eingesetzte Boran kann gemäß J. Chem. Soc. (1957) 501-505 aus kommerziell erhältlichen Boranen hergestellt werden.

Die Erfindung betrifft weiterhin Silylalkylborazine mit der Formel (X):

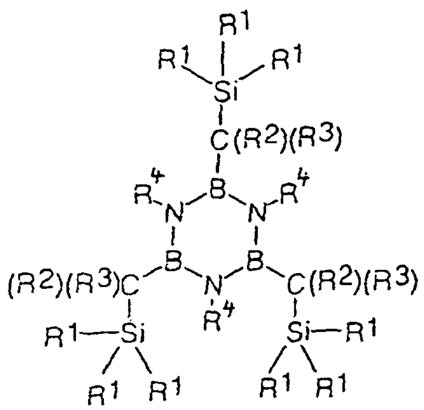

(X)

worin R' jeweils unabhängig voneinander Wasserstoff, Halogen, einen Kohlenwasserstoffrest mit 1 bis 20 C-Atomen, N(R')(R") oder OR' bedeutet, worin R' und R" jeweils unabhängig Wasserstoff oder einen Kohlenwasserstoffrest mit 1 bis 20 C-Atomen darstellt, und $R^2$ und $R^3$ jeweils unabhängig Wasserstoff bedeuten, und $R^4$ jeweils unabhängig $R^1$, $Sn(R^*)_3$ oder $Si(R^*)_3$ darstellt, worin R* jeweils unabhängig Wasserstoff, Halogen, N(R')(R"), OR' oder einen Kohlenwasserstoffrest mit 1 bis 20 C-Atomen bedeutet.

Die in den vorliegenden Silylalkylborazinen bevorzugten bzw. besonders bevorzugten Reste entsprechen den hierin für die Silylalkylborane als bevorzugt angegebenen Resten.

Die erfindungsgemäßen Silylalkylborazine eignen sich besonders als Vorläuferverbindungen und führen nach Polymerisation und Pyrolyse der Polymere zu neuen amorphen Si/B/N/C-Keramiken mit verbesserten, bisher in diesem System unerreichten, Hochtemperatur- und Oxidationsbeständigkeiten. Diese neuen Keramiken zeigen praktisch keinen Massenverlust bis mindestens 2000 °C oder/und sind in reinem Sauerstoff bis mindestens 1400 ° C oxidationsstabil.

Die erfindungsgemäßen Silylalkylborane können mit Aminen des Typs $N(R^4)_3$ oder den entsprechenden Ammoniumsalzen $HN(R^4)_3{}^+A^-$ zu den beschriebenen Silylalkylborazinen umgesetzt werden, wobei $R^4$ jeweils unabhängig die oben angegebenen Bedeutungen hat. $A^-$ stellt ein beliebiges Anion dar und ist insbesondere ein Halogenid, wie etwa $F^-$, $Cl^-$, $Br^-$ oder $J^-$, eine $SO_4{}^{2-}$-Gruppe, eine $NO_3{}^-$-Gruppe oder eine Nitrit-, Chlorat-, Perchlorat-, Carbamat-, Tartrat-, Phosphat-, Pentaborat-, Chromat-, Citrat-, Hydrogencitrat-, Carbonat-, Hydrogencarbonat-, Triflat-, Acetat- oder Benzoatgruppe. Bevorzugt ist $A^-$ ein Halogenid, besonders bevorzugt Chlorid.

Die Umsetzung der Silylalkylborane mit den Aminen bzw. Ammoniumsalzen erfolgt bevorzugt mit oder ohne

Lösemittel bei Temperaturen zwischen -100 °C und 200 °C, mehr bevorzugt bei Temperaturen zwischen 20 °C und 50 °C.

Ein weiteres Verfahren zur Herstellung der Silylalkylborazine geht von Borazinen des Typs

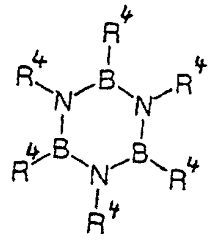

aus, worin $R^4$ jeweils unabhängig voneinander Wasserstoff, Halogen, einen Kohlenwasserstoffrest mit 1 bis 20 C-Atomen, N(R')(R"), OR', worin R' und R" jeweils unabhängig Wasserstoff oder einen Kohlenwasserstoffrest mit 1 bis 20 C-Atomen darstellen, $Sn(R^*)_3$ oder $Si(R^*)_3$ darstellt, worin R* jeweils unabhängig dieselben Bedeutungen wie R hat.

Diese Borazine werden in Gegenwart einer geeigneten Kombination aus Katalysator, Base und Säurefänger (z.B. ein Zeolith) mit Silanen der oben angegebenen Formel (III) oder mit Silanen des Typs

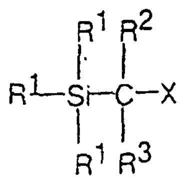

umgesetzt, worin $R^1$ jeweils unabhängig voneinander Wasserstoff, Halogen, einen Kohlenwasserstoffrest mit 1 bis 20 C-Atomen, N(R')(R") oder OR' bedeutet, worin R' und R" jeweils unabhängig Wasserstoff oder einen Kohlenwasserstoffrest mit 1 bis 20 C-Atomen darstellt, und $R^2$ und $R^3$ jeweils unabhängig Wasserstoff bedeutet. X bedeutet Wasserstoff, Halogen, $Sn(R^*)_3$ oder $Si(R^*)_3$ worin R* jeweils unabhängig dieselben Bedeutungen wie R bei den Silylalkylborazinen hat.

Besonders bevorzugt wird bei dieser Umsetzung ein Borazin eingesetzt, bei dem $R^4$ am Bor Halogen darstellt und $R^4$ am Stickstoff Wasserstoff darstellt und ein Silan einsetzt, bei dem X = Wasserstoff.

Gegenstand der Erfindung sind zudem Oligo- und Polyborocarbosilazane erhältlich aus den erfindungsgemäßen molekularen Silylalkylboranen oder Silylalkylborazinen, dadurch gekennzeichnet, dass in erster Koordinationssphäre jedes Siliciumatom mindestens ein Kohlenstoffatom aufweist und dieses an ein Boratom gebunden ist, wobei dieses Boratom zusätzlich noch an zwei Stickstoffatome gebunden ist.

Die Oligo- oder Polyborocarbosilazane weisen insbesondere die Struktureinheiten Si-C-B-N-B-C-Si, Si-C-B-N-Si-C-Boder/und B-C-Si-N-Si-C-B auf. Die angegebenen Strukturmerkmale sind - zur besseren Übersichtlichkeit - lineare Sequenzen, wobei Si selbstverständlich immer an vier Nachbaratome, B und N immer an drei Nachbaratome und C jeweils an drei oder vier Nachbaratome gebunden ist. Die entsprechenden Bindungstriche wurden zur besseren Übersichtlichkeit weggelassen, können jedoch vom Fachmann ohne weiteres mitgelesen werden. Verzweigungen können an jedem Atom auftreten.

Gegenstand der Erfindung ist zudem ein Verfahren zur Herstellung eines solchen Oligo- oder Polyborocarbosilazans, bei dem ein Silylalkylboran der Formel (I) oder ein Silylalkylborazin der Formel (X) mit einer Verbindung R'R"NH, worin R', R" jeweils unabhängig Wasserstoff oder einen Kohlenwasserstoffrest mit 1 bis 20 C-Atomen darstellt, bei Temperaturen von -100 °C bis 300 °C umgesetzt wird.

Bevorzugt wird das erfindungsgemäße molekulare Silylalkylboran oder Silylalkylborazin mit mindestens der n-fachen molaren Menge, insbesondere mit mindestens der 2n-fachen molaren Menge, wobei n die Zahl der vernetzungsfähigen Stellen im Molekül bedeutet, mehr bevorzugt einem Überschuss Ammoniak und/oder einem Organylamin der Formel $H_2NR$ oder $HNR_2$ mit R = H, $C_1$-$C_6$-Alkyl, Vinyl oder Phenyl pro Mol Silylalkylboran mit oder ohne Lösemittel bei Temperaturen zwischen -100 und 300 °C umgesetzt.

Die Oligo- oder Polyborocarbosilazane können aus den Vorläuferverbindungen, insbesondereden oben genannten Silylalkylboranen oder Silylalkylborazinen auch durch direkte Polymerisation der Einkomponentenvorläufer, insbesondere durch Polykondensation bei Temperaturen zwischen -100 °C und 500 °C gebildet werden. Die Verwendung von Ammoniak oder/und Aminen ist bei der direkten Polymerisierung nicht erforderlich.

Gegenstand der Erfindung ist zudem ein Verfahren, womit die rheologischen Eigenschaften der Oligo- oder Polyborocarbosilazane, die in Form von flüssigen, zähflüssigen oder festen, zum Teil löslichen und schmelzbaren Polymeren anfallen, mit Ammoniak oder durch Temperaturbehandlung eingestellt werden können. Durch die Art der Polymerbildung kann der Vernetzungsgrad der Oligo- oder Polyborocarbosilazane eingestellt werden. Bei Verwendung von Ammoniak oder Aminen entstehen hoch quervernetzte Strukturen, während bei der direkten Polymerisation durch Temperaturbehandlung, z.B. bei ≤ 500 °C, bevorzugt bei ≤ 300 °C überwiegend lineare Strukturen erhalten werden. Somit können Oligo- bzw. Polyborocarbosilazane mit unterschiedlichen, gewünschten rheologischen Eigenschaften gezielt hergestellt werden bzw. die rheologischen Eigenschaften von Oligo- oder Polyborocarbosilazanen durch eine entsprechende Nachbehandlung modifiziert werden.

Die Oligo- oder Polyborocarbosilazane fallen in Form von flüssigen, zähflüssigen oder festen, zum Teil löslichen und schmelzbaren Polymeren an, die verschiedenen Formgebungsverfahren unterzogen werden können, z. B. Formgießen, Verspinnen zu Fasern, Ziehen von Folien, Herstellung von Beschichtungen durch verschiedene Beschichtungsverfahren wie Tauch- ("Dip-Coating") oder Fliehkraftbeschichtungen ("Spin-Coating"), bevor diese beispielsweise zu Siliciumborcarbidnitridkeramiken umgesetzt werden.

Ein weiterer Gegenstand der Erfindung ist ein Verfahren zur Herstellung einer Siliciumborcarbidnitridkeramik, bei dem man ein erfindungsgemäßes Oligo- oder Polyborocarbosilazan mit dem Strukturelement Si-C-B(N)-N oder ein Silylalkylboran der Formel (I) oder ein Silylalkylborazin der Formel (X) in einer inerten oder einer Ammoniak-haltigen Atmosphäre bei Temperaturen zwischen -200 °C und +2000 °C pyrolysiert und anschließend in einer inerten oder Ammoniak-haltigen Atmosphäre bei Temperaturen zwischen 800 °C und 2000 °C calciniert.

Die inerte Atmosphäre kann ausgewählt werden aus einer Edelgasatmosphäre, beispielsweise einer Argon- oder Heliumatmosphäre, einer Stickstoffatmosphäre oder einer Atmosphäre aus einem anderen Inertgas, welches unter den Reaktionsbedingungen zwischen 800 °C und 1700 °C nicht mit den Reaktionspartnern reagiert.

In einer bevorzugten Ausführungsform des erfindungsgemäßen Verfahrens werden die Oligo- oder Polyborocarbosilazane mehrere Stunden bei Temperaturen zwischen 30 und 1000 °C getempert. Anschließend werden diese vorzugsweise zur Entfernung von Wasserstoff bei Temperaturen zwischen 1200 und 1600 °C, mit bevorzugten Aufheizraten von 1-100 K/min, in Stickstoff- oder Argonatmosphäre calciniert.

Gegenstand der Erfindung sind außerdem durch das oben beschriebene Verfahren hergestellte Siliciumborcarbidnitridkeramiken aus den erfindungsgemäßen Oligo- oder Polyborocarbosilazanen.

Bevorzugt enthalten diese Keramiken das N-Si-C-B-N-Strukturelement und insbesondere die Struktureinheit Si-C-B-N-B-C-Si, Si-C-B-N-Si-C-B oder/und B-C-Si-N-Si-C-B.

Die erfindungsgemäßen Keramiken können bei der Pyrolyse sowohl kristallin als auch amorph anfallen. Bevorzugt handelt es sich um ein Siliciumborcarbidnitridpulver. Wegen der besonders vorteilhaften Eigenschaften werden Keramiken bevorzugt, bei denen die Elemente N, Si, C und B zu mehr als 93 Gew.-%, insbesondere zu mehr als 97 Gew.-% enthalten sind. Die erfindungsgemäße Keramik weist insbesondere einen geringen Sauerstoffgehalt von < 7 Gew.-%, bevorzugt < 3 Gew.-% und insbesondere < 1 Gew.-% oder < 0,5 Gew.-% auf.

Die Kristallisation des amorphen Materials zu einer Kompositkeramik mit mindestens einem der Materialien SiC, $Si_3N_4$, BN, C und $B_4C$ kann durch Auslagern bei einer Temperatur größer als 1400° C erfolgen. In einer solchen Kompositkeramik sind die Bestandteile im Nanometermaßstab im Wesentlichen völlig homogen verteilt, liegen also in monodisperser Verteilung vor. Die erfindungsgemäßen Kompositkeramiken zeichnen sich insbesondere durch ihre hohe Temperaturbeständigkeit aus und können ganz oder teilweise kristallin, insbesondere als Pulver vorliegen.

Die Oligo- oder Polyborocarbosilazane, Keramiken und Kompositkeramiken können zur Herstellung von keramischen Pulvern, keramischen Beschichtungen, keramischen Formkörpern, keramischen Folien, keramischen Fasern oder keramischen Mikrostrukturen verwendet werden.

Die erfindungsgemäßen Silylalkylborane, Oligo- und Polyborocarbosilazane können in einer chemischen Gasphasenabscheidung (CVD) oder physikalischen Gasphasenabscheidung (PVD) eingesetzt werden. Durch die Beschichtung von Substraten mittels CVD oder PVD können keramische Überzüge oder Beschichtungen hergestellt werden. Die Gasphasenabscheidung kann dabei wie im Stand der Technik beschrieben durchgeführt werden (siehe z.B. DE 196 358 48).

Mikrostrukturen können beispielsweise durch Spritzguss oder lithographische Verfahren erzeugt werden. Die Keramiken eignen sich zur Herstellung von Verbundwerkstoffen. Besonders bevorzugt werden die Keramiken in Form von Fasern hergestellt, aus denen beispielsweise Gewebe beziehungsweise Gerechte angefertigt werden, die als Füllstoffe zur Erhöhung der Festigkeit oder Zähigkeit für andere Keramiken eingesetzt werden können.

Ein weiterer Gegenstand der vorliegenden Erfindung ist ein Verfahren zur Herstellung einer Verbindung der Formel (I)

$$(R)_3Si - C (R^1) (R^2) - B (R)_2 \qquad (I)$$

worin jeweils unabhängig voneinander R einen Kohlenwasserstoff mit 1 bis 20 C-Atomen, Wasserstoff, Halogen, N(R')(R'') oder O(R') darstellt, wobei R' und R'' unabhängig voneinander Wasserstoff oder einen Kohlenwasserstoff mit 1 bis 20 C-Atomen bedeuten und $R^1$ und $R^2$ unabhängig voneinander Wasserstoff bedeuten. Bei dem erfindungsgemäßen Verfahren wird ein Silan der allgemeinen Formel (VI)

$$(R)_3Si - C (R^1) (R^2) - X \qquad (VI)$$

worin X Wasserstoff, Halogen oder Silylreste bedeuten, mit einem Boran der allgemeinen Formel (VII)

$$B (R)_3 \qquad (VII)$$

in Gegenwart einer geeigneten Kombination aus Katalysator, Base und Säurefänger umgesetzt, worin R jeweils unabhängig voneinander einen Kohlenwasserstoff mit 1 bis 20 C-Atomen, Wasserstoff, Halogen, N(R')(R'') oder O(R') darstellt, wobei R' und R'' unabhängig voneinander Wasserstoff oder einen Kohlenwasserstoff mit 1 bis 20 C-Atomen bedeuten.

Noch ein Gegenstand der vorliegenden Erfindung ist ein Verfahren zur Herstellung einer Verbindung der Formel (I)

$$(R)_3Si - C (R^1) (R^2) - B (R)_2 \qquad (I)$$

worin jeweils unabhängig voneinander R einen Kohlenwasserstoff mit 1 bis 20 C-Atomen, Wasserstoff, Halogen, N(R')(R'') oder O(R') darstellt, wobei R' und R'' unabhängig voneinander Wasserstoff oder einen Kohlenwasserstoff mit 1 bis 20 C-Atomen bedeuten und $R^1$ und $R^2$ unabhängig voneinander Wasserstoff bedeuten, dadurch gekennzeichnet dass man eine CH-acide Verbindung der allgemeinen Formel (VIII)

$$(R)_3Si - C (R^1) (R^2) - H \qquad (VIII)$$

in Gegenwart einer geeigneten Kombination aus Katalysator, Base und Säurefänger umsetzt mit einem Boran der allgemeinen Formel (IX)

$$X - B (R)_2 \qquad (IX)$$

wobei R wie oben definiert ist und X Halogen, NR'R'' oder OR' darstellt, wobei R' und R'' unabhängig voneinander Wasserstoff oder einen Kohlenwasserstoff mit 1 bis 20 C-Atomen bedeutet.

Als Säurefänger kann bei beiden oben genannten Verfahren insbesondere ein anorganischer Ionentauscher oder ein Zeolith eingesetzt werden.

Nachfolgend wird die Erfindung anhand einiger Beispiele erläutert:

**Ausführungsbeispiele:**

**Beispiel 1:**

Darstellung von (Trichlorsilyl)(dichlorboryl)methan

Reaktionsgleichungen:

$$1)\ Cl_3Si\text{-}CH_2\text{-}Cl + Mg \rightarrow Cl_3Si\text{-}CH_2\text{-}MgCl$$

$$2)\ Cl_3Si\text{-}CH_2\text{-}MgCl + Cl\text{-}B(OC_2H_5)_2 \rightarrow Cl_3Si\text{-}CH_2\text{-}B(OC_2H_5)_2 + MgCl_2$$

$$3)\ Cl_3Si\text{-}CH_2\text{-}B(OC_2H_5)_2 + 2BCl_3 \rightarrow Cl_3Si\text{-}CH_2\text{-}BCl_2 + 2Cl_2B(OC_2H_5)$$

$$3\ Cl_2B(OC_2H_5) \rightarrow 3\ C_2H_5Cl + BCl_3 + B_2O_3\ [\text{Kat: } AlCl_3]$$

| | | |
|---|---|---|
| Chlormethyl-trichlorsilan | 201 mmol, | 36,9 g |
| Magnesium | 288 mmol, | 7,0 g |
| Bis(ethoxy)chlorboran | 224 mmol, | 23,3 g |
| Bortrichlorid | 488 mmol, | 57,2 g |
| Aluminiumtrichlorid | 19 mmol, | 0,5 g |

7,0 g Magnesiumpulver werden in 150 ml abs. Diethylether suspendiert. Durch Zugabe einiger Tropfen Chlormethyltrichlorsilan und gegebenenfalls leichtes Erwärmen wird die Reaktion gestartet. Zu dieser Suspension wird bei 15 °C eine Lösung von 36,9 g Chlormethyltrichlorsilan in 200 ml Diethylether zugetropft. Nach erfolgter Zugabe wird die Reaktionsmischung auf -78 °C gekühlt und 23,3 g Bis(ethoxy)chlorboran werden in einem Guss zugegeben. Die Reaktionsmischung wird auf Raumtemperatur erwärmt, das entstandene Magnesiumchlorid abfiltriert und das Filtrat vom Lösemittel befreit. Auf den Rückstand werden bei -78 °C 57,2 g Bortrichlorid kondensiert. Zur Entfernung von überschüssigem Bortrichlorid wird die Mischung auf Raumtemperatur erwärmt und mit 0,5 g Aluminiumtrichlorid das Nebenprodukt Ethoxydichlorboran katalytisch zersetzt. Alle flüchtigen Produkte werden in einer Kühlfalle gesammelt und fraktioniert destilliert.

$^1$H-NMR (300 MHz, $C_6D_6$): $\delta$ = 1,62. - "B-NMR (96 MHz, $C_6D_6$): $\delta$ = 58,61. - $^{13}$C-NMR (75 MHz, $C_6D_6$): $\delta$ = 30,53 (d). -$^{29}$Si-NMR (60 MHz, $C_6D_6$): $\delta$ = 3,13.

**Beispiel 2:**

Darstellung von (Dichlormethylsilyl)(dichlorboryl)methan

Reaktionsgleichungen:

$$1)\ Cl_2(CH_3)Si\text{-}CH_2\text{-}Cl + Mg \rightarrow Cl_2(CH_3)Si\text{-}CH_2\text{-}MgCl$$

$$2)\ Cl_2(CH_3)Si\text{-}CH_2\text{-}MgCl + Cl\text{-}B(OC_2H_5)_2 \rightarrow Cl_2(CH_3)Si\text{-}CH_2\text{-}B(OC_2H_5)_2 + MgCl_2$$

$$3)\ Cl_2(CH_3)Si\text{-}CH_2\text{-}B(OC_2H_5)_2 + 2BCl_3 \rightarrow Cl_2(CH_3)Si\text{-}CH_2\text{-}BCl_2 + 2Cl_2B(OC_2H_5)$$

$$3\ Cl_2B(OC_2H_5) \rightarrow 3\ C_2H_5Cl + BCl_3 + B_2O_3\ [Kat: AlCl_3]$$

| | | |
|---|---|---|
| Chlormethyl-methyldichlorsilan | 197 mmol, | 32,3 g |
| Magnesium | 288 mmol, | 7,0 g |
| Bis(ethoxy)chlorboran | 224 mmol, | 23,3 g |
| Bortrichlorid | 488 mmol, | 57,2 g |
| Aluminiumtrichlorid | 19 mmol, | 0,5 g |

7,0 g Magnesiumpulver werden in 150 ml abs. Diethylether suspendiert. Durch Zugabe einiger Tropfen Chlormethylmethyldichlorsilan und gegebenenfalls leichtes Erwärmen wird die Reaktion gestartet. Zu dieser Suspension wird bei 15 °C eine Lösung von 32,3 g Chlormethylmethyldichlorsilan in 200 ml Diethylether zugetropft. Nach erfolgter Zugabe wird die Reaktionsmischung auf -78 °C gekühlt und 23,3 g Bis(ethoxy)chlorboran werden in einem Guss zugegeben. Die Reaktionsmischung wird auf Raumtemperatur erwärmt, das entstandene Magnesiumchlorid abfiltriert und das Filtrat vom Lösemittel befreit. Auf den Rückstand werden bei -78 °C 57,2 g Bortrichlorid kondensiert. Zur Entfernung von überschüssigem Bortrichlorid wird die Mischung auf Raumtemperatur erwärmt und mit 0,5 g Aluminiumtrichlorid das Nebenprodukt Ethoxydichlorboran katalytisch zersetzt. Alle flüchtigen Produkte werden in einer Kühlfalle gesammelt und fraktioniert destilliert.

$^{1}$H-NMR (300 MHz, $C_6D_6$): $\delta$ = 1,47 ($CH_2$); 0,47 ($CH_3$). - $^{11}$B-NMR (96 MHz, $C_6D_6$): $\delta$ = 58,61. - $^{13}$C-NMR (75 MHz, $C_6D_6$): $\delta$ = 29,28 (d). $^{29}$Si-NMR (60 MHz, $C_6D_6$): $\delta$ = 23,85.

**Beispiel 3:**

Darstellung von Tris(dimethylamino)silyl-bis(dimethylamino)boryl-methan

Reaktionsgleichung:

$$Cl_3Si\text{-}CH_2\text{-}BCl_2 + 10\ (CH_3)_2NH \rightarrow [(CH_3)_2N]_3Si\text{-}CH_2\text{-}B[N(CH_3)_2]_2 + 5\ (CH_3)_2NH_2Cl$$

| | | |
|---|---|---|
| (Trichlorsilyl)(dichlorboryl)methan | 75 mmol, | 17,3 g |
| Dimethylamin | 3810 mmol, | 171,8 g |

Zu einer Lösung aus 171,8 g Dimethylamin in 200 ml abs. Hexan wird eine Lösung aus 17,3 g (Trichlorsilyl)(dichlorboryl)methan in 200 ml abs. Hexan zugetropft. Nach Erwärmen der Reaktionsmischung auf Raumtemperatur wird das entstandene Dimethylaminhydrochlorid abfiltriert, das Filtrat vom Lösemittel befreit und der Rückstand fraktionierend destilliert.

$^{1}$H-NMR (300 MHz, $C_6D_6$): $\delta$ = 2,45 ($SiNCH_3$); 2,50 ($BNCH_3$).

**Beispiel 4:**

Reaktion von (Trichlorsilyl)(dichlorboryl)methan mit Monomethylamin

| | | |
|---|---|---|
| (Trichlorsilyl)(dichlorboryl)methan | 37 mmol, | 8,5 g |
| Dimethylamin | 1722 mmol, | 53,5 g |

Zu einer Lösung aus 53,5 g Dimethylamin in 120 ml abs. Hexan wird eine Lösung aus 8,5 g (Trichlorsilyl)(dichlorboryl)methan in 120 ml abs. Hexan zugetropft. Nach Erwärmen der Reaktionsmischung auf Raumtemperatur wird das entstandene Monomethylaminhydrochlorid abfiltriert und das Filtrat vom Lösemittel befreit. Das Polyborocarbosilazan verbleibt als klarer zähflüssiger Rückstand.

**Beispiel 5:**

Reaktion von Tris(dimethylamino)silylbis(dimethylamino)borylmethan mit Ammoniak

| | | |
|---|---|---|
| (Trichlorsilyl)(dichlorboryl)methan | 32 mmol, | 8,7 g |
| Ammoniak | 5000 mmol, | 85,0 g |

8,7 g Tris(dimethylamino)silyl/bis(dimethylamino)boryl/methan werden bei -50 °C in 85,0 g Ammoniak für 48h gerührt. Nach Abdestillieren des Ammoniaks verbleibt das Polyborocarbosilazan als weißer fester Rückstand.

**Beispiel 6**

**Darstellung von B,B',B''-(Trichlorsilylmethyl)borazin**

Reaktionsgleichungen:

$$3\ Cl_3Si\text{-}CH_2\text{-}BCl_2 + 3\ (CH_3)_3Si\text{-}NH\text{-}SiCl_3 \rightarrow$$

$$[Cl_3Si\text{-}CH_2\text{-}BNH]_3 + 3\ SiCl_3 + 3\ (CH_3)_3SiCl$$

| | | |
|---|---|---|
| (Trichlorsilyl)(dichlorboryl)methan | 36 mmol , | 8,4 g |
| (Trichlorsilyl)(trimethylsilyl)amin | 50 mmol, | 11,2 g |

Zu einer Lösung aus 11,2 g (Trichlorsilyl)(trimethylsilyl)amin in 50 ml Hexan wird unter Rühren bei Raumtemperatur eine Lösung aus 8,4 g (Trichlorsilyl)(dichlorboryl)methan in 20 ml Hexan zugetropft. Nach 18 h Reaktionszeit werden alle flüchtigen Komponenten bei 10 mbar abdestilliert und der Rückstand aus Dichlormethan umkristallisiert.

$^1$H-NMR (300 MHz, $C_6D_6$): $\delta$ = 0,61 ($CH_2$); 4,50 (NH). - $^{13}$C-NMR (75 MHz, $C_6D_6$): $\delta$ = 16,98. - $^{11}$B-NMR (96 MHz, $C_6D_6$): $\delta$ = 32,74.

**Beispiel 7**

**Darstellung von B,B',B''-(Trichlorsilylmethyl)borazin**

Reaktionsgleichungen:

$$3\ Cl_3Si\text{-}CH_2\text{-}BCl_2 + 3\ (CH_3)_3Si\text{-}NH\text{-}Si(CH_3)_3 \rightarrow [Cl_3Si\text{-}CH_2\text{-}BNH]_3 +$$

$$6\ (CH_3)_3SiCl$$

| | | |
|---|---|---|
| (Trichlorsilyl)(dichlorboryl)methan | 43 mmol , | 9,9 g |
| Hexamethyldisilazan | 45 mmol, | 7,3 g |

Zu 9,9 g (Trichlorsilyl)(dichlorboryl)methan werden unter Rühren bei Raumtemperatur 7,3 g Hexamethyldisilazan zugetropft. Nach 12 h werden alle flüchtigen Komponenten im Hochvakuum abdestilliert und der Rückstand aus Dichlormethan umkristallisiert.

**Beispiel 8**

**Darstellung von B,B',B"-(Methyldichlorsilylmethyl)borazin**

Reaktionsgleichungen:

$$3\ Cl_2(CH_3)Si\text{-}CH_2\text{-}BCl_2 + 3\ (CH_3)_3Si\text{-}NH\text{-}SiCl_3 \rightarrow$$

$$[Cl_2(CH_3)Si\text{-}CH_2\text{-}BNH]_3 + 3\ SiCl_3 + 3\ (CH_3)_3SiCl$$

| | | |
|---|---|---|
| (Methyldichlorsilyl)(dichforboryl)methan | 62 mmol , | 13,0 g |
| (Trichlorsifyl)(trimethylsilyl)amin | 69 mmol, | 15,4 g |

Zu einer Lösung aus 15,4 g (Trichlorsilyl)(trimethylsilyl)amin in 70 ml Hexan wird unter Rühren bei Raumtemperatur eine Lösung aus 13,0 g (Methyldichlorsifyl)(dichlorboryl)-methan in 30 ml Hexan zugetropft. Nach 18 h Reaktionszeit werden alle flüchtigen Komponenten bei 10 mbar abdestilliert und der Rückstand aus Dichlormethan umkristallisiert.

$^1$H-NMR (300 MHz, $C_6D_6$): $\delta$ = 0,48 ($CH_3$); 0,49 ($CH_2$); 4,53 (NH). - $^{13}$C-NMR (75 MHz, $C_6D_6$): $\delta$ = 6,84 ($CH_3$); 14,68 ($CH_2$). - "B-NMR (96 MHz, $C_6D_6$): $\delta$ = 33,60.

**Beispiel 9**

**Darstellung von B,B',B"-(Methyldichlorsilylmethyl)borazin**

Reaktionsgleichungen:

$$3\ Cl_2(CH_3)Si\text{-}CH_2\text{-}BCl_2 + 3\ (CH_3)_3Si\text{-}NH\text{-}Si(CH_3)_3 \rightarrow$$

$$[Cl_2(CH_3)Si\text{-}CH_2\text{-}BNH]_3 + 6\ (CH_3)_3SiCl$$

| | | |
|---|---|---|
| (Methyldichlorsilyl)(dichlorboryl)methan | 55 mmol , | 11,5 g |
| Hexamethyldisilazan | 61 mmol, | 9,8 g |

Zu 11,5 g (Methyldichlorsilyl)(dichlorboryl)methan werden unter Rühren bei Raumtemperatur 9,8 g Hexamethyldisilazan zugetropft. Nach 12 h werden alle flüchtigen Komponenten im Hochvakuum abdestilliert und der Rückstand aus Dichlormethan umkristallisiert.

**Beispiel 10**

**Reaktion von B,B',B"-(Trichlorsilylmethyl)borazin mit Monomethylamin**

| | | |
|---|---|---|
| B,B',B"-(Trichlorsilylmethyl)borazin | 26 mmol, | 12,0 g |

(fortgesetzt)

| | | |
|---|---|---|
| Dimethylamin | 1500 mmol, | 46,6 g |

Zu einer Lösung aus 53,5 g Dimethylamin in 120 ml abs. Hexan wird eine Lösung aus 8,5 g (Trichlorsilyl)(dichlorboryl)methan in 120 ml abs. Hexan zugetropft. Nach erwärmen der Reaktionsmischung auf Raumtemperatur wird das entstandene Monomethylaminhydrochlorid abfiltriert und das Filtrat vom Lösemittel befreit. Das Polyborocarbosilazan verbleibt als klarer zähflüssiger Rückstand.

**Beispiel 11**

**Reaktion von B,B',B''-(Methyldichlorsilylmethyl)borazin mit Monomethylamin**

| | | |
|---|---|---|
| B,B',B''-(Methyldichlorsilylmethyl)borazin | 22 mmol, | 11,5 g |
| Dimethylamin | 1500 mmol, | 46,6 g |

Zu einer Lösung aus 53,5 g Dimethylamin in 120 ml abs. Hexan wird eine Lösung aus 8,5 g (Trichiorsilyl)(dichlorboryl)methan in 120 ml abs. Hexan zugetropft. Nach erwärmen der Reaktionsmischung auf Raumtemperatur wird das entstandene Monomethylaminhydrochlorid abfiltriert und das Filtrat vom Lösemittel befreit. Das Polyborocarbosilazan verbleibt als klarer zähflüssiger Rückstand.

**Patentansprüche**

**1.** Verfahren zur Herstellung einer Verbindung der Formel (I)

$$(R)_3Si - C (R^1) (R^2) - B(R)_2,$$

worin R jeweils unabhängig einen Kohlenwasserstoff mit 1 bis 20 C-Atomen, Wasserstoff, Halogen, NR'R'' oder OR' darstellt, wobei R' und R'' unabhängig voneinander Wasserstoff oder einen Kohlenwasserstoff mit 1 bis 20 C-Atomen bedeuten und $R^1$ und $R^2$ Wasserstoff darstellen,
**dadurch gekennzeichnet,**
**dass** man ein Silan der allgemeinen Formel (II)

$$(R)_3Si - C (R^1) (R^2) - X,$$

worin X Halogen bedeutet, mit einem Metall M bei Temperaturen unterhalb 50 °C in einem aprotischen organischen Lösemittel zu einem Silan der allgemeinen Formel (III)

$$(R)_3Si - C (R^1) (R^2) - M (X)_w$$

wobei w = 0 ist, wenn M ein einwertiges Metall ist, und wobei w eine ganze Zahl ≥ 1 entsprechend der Wertigkeitsstufen von M minus 1 ist, wenn M ein mehrwertiges Metall ist,
umsetzt und die Verbindung der allgemeinen Formel (III) anschließend bei Temperaturen unterhalb 50 °C mit einem Boran der allgemeinen Formel

$$Y - B (R)_2$$

wobei R wie oben definiert ist und Y Halogen, NR'R'' oder OR' darstellt,
wobei R' und R'' unabhängig voneinander Wasserstoff oder einen Kohlenwasserstoff mit 1 bis 20 C-Atomen bedeutet, umsetzt.

2. Verfahren nach Anspruch 1,
**dadurch gekennzeichnet,**
**dass** eine Chlormethyl-Silanverbindung der Formel

$$(R)_3Si - CH_2Cl$$

wobei R jeweils unabhängig die in Anspruch 1 angegebenen Bedeutungen haben kann, in einer Grignard-Reaktion mit Magnesium-Pulver metalliert wird und anschließend mit dem Halogenboran umgesetzt wird.

3. Verfahren nach einem der Ansprüche 1 oder 2,
**dadurch gekennzeichnet,**
**dass** das Silan der allgemeinen Formel (III) mit mindestens einem Alkyloxychlorboran $XB(R^3)(R^{3'})$ umgesetzt wird, worin X Cl bedeutet und $R^3$ und $R^{3'}$ unabhängig voneinander einen $C_1$-$C_{20}$-Alkoxy- oder Phenyloxyrest darstellen.

4. Verfahren zur Herstellung einer Verbindung der allgemeinen Formel (IV)

$$(R)_3Si - C(R^1)(R^2) - B(X)_2,$$

worin $R^1$ und $R^2$ jeweils Wasserstoff sind und R jeweils unabhängig Wasserstoff, Halogen, einen Kohlenwasserstoffrest mit 1 bis 20 C-Atomen, einen Rest N(R')(R") oder einen Rest OR' darstellt, worin R" und R' unabhängig voneinander Wasserstoff oder einen Kohlenwasserstoffrest mit 1 bis 20 C-Atomen darstellen, und
X Halogen bedeutet,
**dadurch gekennzeichnet,**
**dass** man eine Verbindung der allgemeinen Formel (V)

$$(R)_3Si - C(R^1)(R^2) - B(OR')(OR")$$

mit einem Elementhalogenid oder einem organischen Säurehalogenid umsetzt.

5. Molekulares Silylalkylboran der allgemeinen Formel (I)

$$(R)_3Si - C(R^1)(R^2) - B(R)_2,$$

worin R jeweils unabhängig voneinander Wasserstoff, Halogen, einen Kohlenwasserstoffrest mit 1 bis 20 C-Atomen, N(R')(R") oder OR' bedeutet,
worin R' und R" jeweils unabhängig Wasserstoff oder einen Kohlenwasserstoffrest mit 1 bis 20 C-Atomen darstellt, und $R^1$ und $R^2$ jeweils Wasserstoff bedeutet.

6. Molekulares Silylalkylboran nach Anspruch 5,
**dadurch gekennzeichnet,**
**dass** wenigstens einer der Reste R Methyl oder/und Cl darstellt.

7. Silylalkylborazin mit der Formel (X)

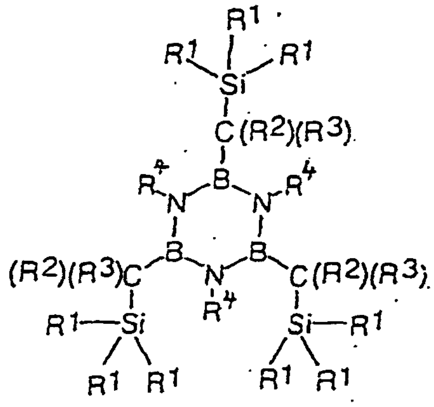

worin $R^1$ jeweils unabhängig voneinander Wasserstoff, Halogen, einen Kohlenwasserstoffrest mit 1 bis 20 C-Atomen, N(R')(R'') oder OR' bedeutet, worin R' und R'' jeweils unabhängig Wasserstoff oder einen Kohlenwasserstoffrest mit 1 bis 20 C-Atomen darstellt, und $R^2$ und $R^3$ jeweils Wasserstoff bedeuten und $R^4$ jeweils unabhängig voneinander Wasserstoff, Halogen, N(R')(R'') oder OR' bedeutet, worin R' und R'' jeweils unabhängig Wasserstoff oder einen Kohlenwasserstoffrest mit 1 bis 20 C-Atomen darstellt, oder $Sn(R^*)_3$ oder $Si(R^*)_3$ bedeutet, worin R* jeweils unabhängig Wasserstoff, Halogen, N(R')(R''), OR' oder einen Kohlenwasserstoffrest mit 1 bis 20 C-Atomen bedeutet.

**8.** Verfahren zur Herstellung eines Silyialkyiborazins nach Anspruch 7,
**dadurch gekennzeichnet,**
**dass** man ein Silylalkylboran der Formel (I), wie in einem der Ansprüche 5 oder 6 definiert, mit einem Amin $N(R^4)_3$ oder einem Ammoniumsalz $HN(R^4)_3^+$, worin $R^4$ die in Anspruch 7 angegebene Bedeutung hat und A-ein Anion darstellt, umsetzt.

**9.** Verfahren zur Herstellung eines Silylalkylborazins nach Anspruch 7,
**dadurch gekennzeichnet,**
**dass** man ein Borazin der Formel (XI)

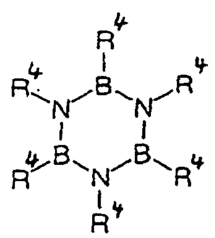

worin $R^4$ jeweils unabhängig voneinander Wasserstoff, Halogen, N(R')(R''), OR', worin R' und R'' jeweils unabhängig Wasserstoff oder einen Kohlenwasserstoffrest mit 1 bis 20 C-Atomen darstellen, $Sn(R^*)_3$ oder $Si(R^*)_3$ darstellt, worin R* jeweils unabhängig dieselben Bedeutungen wie für R in Anspruch 1 angegeben hat in Gegenwart einer geeigneten Kombination aus Katalysator, Base und Säurefänger umsetzt, mit Silanen der Formel (III), wie in Anspruch 1 angegeben oder mit Silanen des Typs

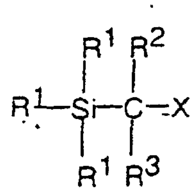

worin $R^1$ jeweils unabhängig voneinander Wasserstoff, Halogen, einen Kohlenwasserstoffrest mit 1 bis 20 C-Atomen, N(R')(R") oder OR' bedeutet, worin R' und R" jeweils unabhängig Wasserstoff oder einen Kohlenwasserstoffrest mit 1 bis 20 C-Atomen darstellt, und $R^2$ und $R^3$ jeweils Wasserstoff bedeuten.

**10.** Verfahren zur Herstellung eines Oligo- oder Polyborocarbosilazans,
**dadurch gekennzeichnet,**
**dass** man eine Verbindung der Formel (I) gemäß einem der Ansprüche 5 oder 6, worin R' und R" wie in Anspruch 5 definiert sind oder eine Verbindung der Formel (X) gemäß Anspruch 7 als Einkomponentenvorläufer in einer Polymerisationsoder Polykondensationsreaktion bei Temperaturen zwischen -100 °C und 500 °C umsetzt.

**11.** Verfahren zur Herstellung eines Oligo- oder Polyborocarbosilazans,
**dadurch gekennzeichnet,**
**dass** man ein Silylalkylboran, erhältlich durch ein Verfahren nach einem der Ansprüche 1 bis 4, oder ein Silylalkylboran nach einem der Ansprüche 5 oder 6 oder ein Silylalkylborazin nach Anspruch 7 mit einer Verbindung R'R"NH, worin R', R" jeweils unabhängig Wasserstoff oder einen Kohlenwasserstoffrest mit 1 bis 20 C-Atomen darstellt, bei Temperaturen von -100 °C bis 300 °C umsetzt.

**12.** Oligo- oder Polyborocarbosilazan mit dem Strukturmerkmal

Si-C-B(N)-N,

welches mit einem Verfahren nach Anspruch 10 oder 11 erhältlich ist.

**13.** Verfahren zur Herstellung einer Siliciumborcarbidnitridkeramik,
**dadurch gekennzeichnet,**
**dass** man ein Oligo- oder Polyborocarbosilazan nach Anspruch 12 oder ein Silylalkylboran der Formel (I), erhältlich durch ein Verfahren nach einem der Ansprüche 1 bis 4 oder ein Silylalkylborazin mit der Formel

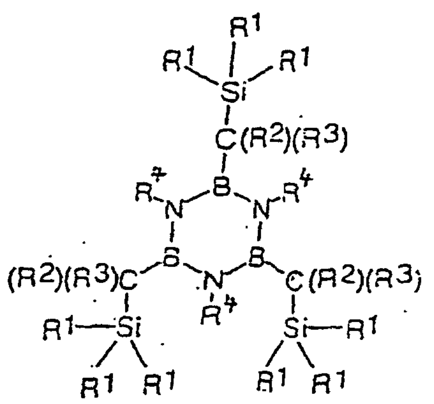

worin $R^1$ jeweils unabhängig voneinander Wasserstoff, Halogen, einen. Kohlenwasserstoffrest mit 1 bis 20 C-Atomen, N(R')(R") oder OR' bedeutet, worin R' und R" jeweils unabhängig Wasserstoff oder einen Kohlenwasserstoffrest mit 1 bis 20 C-Atomen darstellt und $R^2$ und $R^3$ jeweils Wasserstoff bedeuten und $R^4$ $R^1$, $Sn(R^*)_3$ oder $Si(R^*)_3$ bedeutet, worin R* jeweils unabhängig $R^2$ oder einen Kohlenwasserstoffrest mit 1 bis 20 C-Atomen bedeutet, in einer inerten oder einer Ammoniak-haltigen Atmosphäre bei Temperaturen zwischen -200 °C und + 2000 °C pyrolysiert und anschließend in einer inerten oder Ammoniak-haltigen Atmosphäre bei Temperaturen zwischen 800 °C und 2000 °C calciniert.

**14.** Siliciumborcarbidnitridkeramik, erhältlich mit einem Verfahren nach Anspruch 13,
**dadurch gekennzeichnet,**
**dass** in der Keramik N-Si-C-B-N-Struktureinheiten vorliegen.

**15.** Keramik nach Anspruch 14,

**dadurch gekennzeichnet,**
**dass** es sich um eine amorphe Keramik handelt.

**16.** Keramik nach Anspruch 14 oder 15,
**dadurch gekennzeichnet,**
**dass** die Elemente N, Si, C und B zu mehr als 93 Gew.-% enthalten sind.

**17.** Verfahren zur Herstellung einer Kompositkeramik aus mindestens einer der Komponenten SiC, $Si_3N_4$, BN, C und $B_4C$,
**dadurch gekennzeichnet,**
**dass** man eine Siliciumborcarbidnitridkeramik nach einem der Ansprüche 14 bis 16 bei Temperaturen größer als 1400 °C auslagert.

**18.** Kompositkeramik, erhältlich durch ein Verfahren nach Anspruch 13 durch Kristallisation einer Siliciumborcarbidnitridkeramik nach einem der Ansprüche 14 bis 16,
**dadurch gekennzeichnet,**
**dass** SiC, $Si_3N_4$, BN, C oder/und $B_4C$ in molekulardisperser Verteilung vorliegen.

**19.** Kompositkeramik nach Anspruch 18,
**dadurch gekennzeichnet,**
**dass** es sich um eine zumindest teilweise kristalline Keramik handelt.

**20.** Verwendung von Oligo- oder Polyborocarbosilazanen nach Anspruch 12, von Siliciumborcarbidnitridkeramiken nach Anspruch 14 bis 16 oder von Kompositkeramiken nach Anspruch 18 oder 19 zur Herstellung von keramischen Pulvern, keramischen Beschichtungen, keramischen Formkörpern, keramischen Folien, keramischen Fasern oder keramischen Mikrostrukturen.

**21.** Verfahren zur Herstellung einer Verbindung der Formel (I)

$$(R)_3Si - C (R^1) (R^2) - B (R)_2.$$

worin jeweils unabhängig voneinander R einen Kohlenwasserstoff mit 1 bis 20 C-Atomen, Wasserstoff, Halogen, N(R')(R") oder O(R') darstellt, wobei R' und R" unabhängig voneinander Wasserstoff oder einen Kohlenwasserstoff mit 1 bis 20 C-Atomen bedeuten und $R^1$ und $R^2$ Wasserstoff bedeuten,
**dadurch gekennzeichnet,**
**dass** man ein Silan der allgemeinen Formel (VI)

$$(R)_3Si - C (R^1) (R^2) - X$$

worin X Wasserstoff, Halogen oder Silylreste bedeuten, mit einem Boran der allgemeinen Formel (VII)

$$B(R)_3$$

in Gegenwart einer geeigneten Kombination aus Katalysator, Base und Säurefänger umsetzt, worin R jeweils unabhängig voneinander einen Kohlenwasserstoff mit 1 bis 20 C-Atomen, Wasserstoff, Halogen, N(R')(R") oder O(R') darstellt, wobei R' und R" unabhängig voneinander Wasserstoff oder einen Kohlenwasserstoff mit 1 bis 20 C-Atomen bedeuten.

**22.** Verfahren zur Herstellung einer Verbindung der Formel (I)

$$(R)_3Si - C (R^1) (R^2) - B (R)_2,$$

worin jeweils unabhängig voneinander R einen Kohlenwasserstoff mit 1 bis 20 C-Atomen, Wasserstoff, Halogen, N(R')(R") oder O(R') darstellt, wobei R' und R" unabhängig voneinander Wasserstoff oder einen Kohlenwasserstoff

mit 1 bis 20 C-Atomen bedeuten und $R^1$ und $R^2$ Wasserstoff bedeuten,
**dadurch gekennzeichnet,**
**dass** man eine CH-acide Verbindung der allgemeinen Formel (VIII)

$$(R)_3Si - C (R^1) (R^2) - H$$

in Gegenwart einer geeigneten Kombination aus Katalysator, Base und Säurefänger umsetzt mit einem Boran der allgemeinen Formel (IX)

$$Y - B (R)_2$$

wobei R wie oben definiert ist und Y Halogen, NR'R" oder OR' darstellt,
wobei R' und R" unabhängig voneinander Wasserstoff oder einen Kohlenwasserstoff mit 1 bis 20 C-Atomen bedeutet.

**23.** Verfahren nach Anspruch 21 oder 22, wobei als Säurefänger ein anorganischer Ionentauscher oder ein Zeolith verwendet wird.

**Claims**

**1.** Process for producing a compound of formula (I)

$$(R)_3Si\text{-}C(R^1)(R^2)\text{-}B(R)_2$$

in which R in each case independently represents a hydrocarbon with 1 to 20 C atoms, hydrogen, halogen, NR'R" or OR' where R' and R" independently of one another denote hydrogen or a hydrocarbon with 1 to 20 C atoms and $R^1$ and $R^2$ represent hydrogen,
**characterized in that**
a silane of the general formula (II)

$$(R)_3Si - C (R^1)(R^2)\text{-}X,$$

in which X denotes halogen is reacted with a metal M at temperatures below 50°C in an aprotic organic solvent to form a silane of the general formula (III)

$$(R)_3Si - C (R^1) (R^2) - M (X)_w$$

in which w = 0 if M is a monovalent metal and
w is an integer ≥ 1 corresponding to the valence stages of M minus 1 if M is a multivalent metal,
and the compound of the general formula (III) is subsequently reacted at temperatures below 50°C with a borane of the general formula

$$Y - B (R)_2$$

in which R is defined as above and Y represents halogen, NR'R" or OR' where R' and R" independently of one another denote hydrogen or a hydrocarbon with 1 to 20 C atoms.

**2.** Process as claimed in claim 1,
**characterized in that**
a chloromethyl-silane compound of formula

$$(R)_3Si - CH_2Cl$$

in which R can in each case independently have the meanings stated in claim 1, is metallated with magnesium powder in a Grignard reaction and subsequently reacted with the halogenborane.

**3.** Process as claimed in one of the claims 1 or 2,
**characterized in that**
the silane of the general formula (III) is reacted with at least one alkyloxychloroborane $XB(R^3)(R^{3'})$ in which X denotes Cl and $R^3$ and $R^{3'}$ independently of one another represent a $C_1$-$C_{20}$ alkoxy or phenyloxy residue.

**4.** Process for producing a compound of the general formula (IV)

$$(R)_3Si - C (R^1) (R^2) - B (X)_2,$$

in which $R^1$ and $R^2$ are in each case hydrogen and R in each case independently represents hydrogen, halogen, a hydrocarbon residue with 1 to 20 C atoms, a residue N(R')(R") or a residue OR' where R" and R' independently of one another represent hydrogen or a hydrocarbon residue with 1 to 20 C atoms and X denotes halogen,
**characterized in that**
a compound of the general formula (V)

$$(R)_3Si - C (R^1) (R^2) - B(OR') (OR")$$

is reacted with an element halogenide or an organic acid halogenide.

**5.** Molecular silylalkylborane of the general formula (I)

$$(R)_3Si - C (R^1) (R^2) - B(R)_2$$

in which each R independently of one another denotes hydrogen, halogen, a hydrocarbon residue with 1 to 20 C atoms, N(R')(R") or OR' where R' and R" each independently represent hydrogen or a hydrocarbon residue with to 20 C atoms, and $R^1$ and $R^2$ each denote hydrogen.

**6.** Molecular silylalkylborane as claimed in claim 5,
**characterized in that**
at least one of the residues R represents methyl or/and Cl.

**7.** Silylalkylborazine of formula (X):

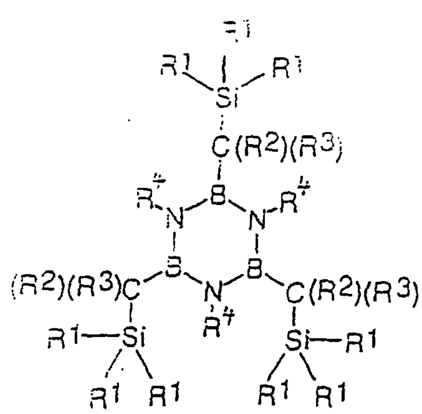

in which each $R^1$ independently of one another denotes hydrogen, halogen, a hydrocarbon residue with 1 to 20 C

atoms, N(R')(R") or OR', in which R' and R" each independently represent hydrogen or a hydrocarbon residue with 1 to 20 C atoms and $R^2$ and $R^3$ each denote hydrogen, and $R^4$ in each case independently of one another denotes hydrogen, halogen, N(R')(R") or OR' where R' and R" each independently represents hydrogen or a hydrocarbon residue with 1 to 20 C atoms, or denotes $Sn(R^*)_3$ or $Si(R^*)_3$ in which R* each independently denotes hydrogen, halogen, N(R')(R"), OR' or a hydrocarbon residue with 1 to 20 C atoms

**8.** Process for the production of a silylalkylborazine as claimed in claim 7,
**characterized in that**
a silylalkylborane of formula (I) as defined in one of the claims 5 or 6 is reacted with an amine $N(R^4)_3$ or an ammonium salt $HN(R^4)_3^+$ in which $R^4$ has the meaning stated in claim 7 and $A^-$ represents an anion.

**9.** Process for producing a silylalkylborazine as claimed in claim 7,
**characterized in that**
a borazine of formula (XI)

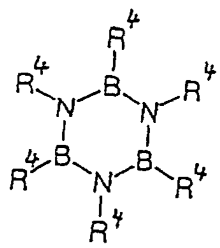

in which $R^4$ in each case independently of one another represents hydrogen. halogen, N(R')(R"), OR', in which R' and R" each independently represent hydrogen or a hydrocarbon residue with 1 to 20 C atoms, $Sn(R^*)_3$ or $Si(R^*)_3$ in which R* each independently has the same meaning as stated for R in claim 1, is reacted in the presence of a suitable combination of catalyst, base and acid trap with silanes of formula (III) as stated in claim 1 or with silanes of the type

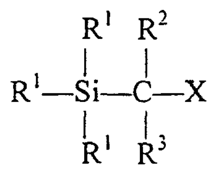

in which each $R^1$ independently of one another denotes hydrogen, halogen, a hydrocarbon residue with 1 to 20 C atoms, N(R')(R") or OR', in which R' and R" each independently represent hydrogen or a hydrocarbon residue with 1 to 20 C atoms, and $R^2$ and $R^3$ each denote hydrogen.

**10.** Process for the production of an oligoborocarbosilazane or polyborocarbosilazane,
**characterized in that**
a compound of fonnula (I) as claimed in one of the claims 5 or 6, in which R' and R" are defined as in claim 5 or a compound of formula (X) as claimed in claim 7 is reacted as a single component precursor in a polymerization or polycondensation reaction at temperatures between -100°C and 500°C.

**11.** Process for the production of an oligoborocarbosilazane or polyborocarbosilazane,
**characterized in that**
a silylalkylborane obtainable by a process as claimed in one of the claims 1 to 4 or a silylalkylborane as claimed in one of the claims 5 or 6 or a silylalkylborazine as claimed in claim 7 is reacted at temperatures of -100°C to 300°C with a compound R'R"NH in which R', R" each independently represent hydrogen or a hydrocarbon residue with 1 to 20 C atoms.

**12.** Oligoborocarbosilazane or polyborocarbosilazane having the structural feature

Si-C-B(N)-N,

which can be obtained using a process as claimed in claim 10 or 11.

**13.** Process for producing a silicon boron carbide nitride ceramic,
**characterized in that**
an oligoborocarbosilazane or polyborocarbosilazane as claimed in claim 12 or a silylalkylborane of formula (I) obtainable by a process as claimed in one of the claims 1 to 4 or a silylalkylborazine having the formula

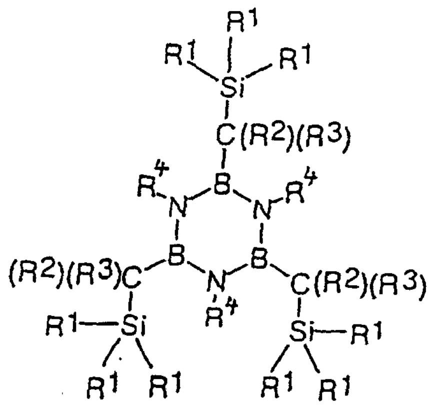

in which R' in each case independently of one another represents hydrogen, halogen, a hydrocarbon residue with 1 to 20 C atoms, N(R')(R") or OR' where R' and R" each independently represents hydrogen or a hydrocarbon residue with 1 to 20 C atoms and $R^2$ and $R^3$ each denote hydrogen and $R^4$ denotes $R^1$, $Sn(R^*)_3$ or $Si(R^*)_3$ where $R^*$ in each case independently represents $R^2$ or a hydrocarbon residue with 1 to 20 C atoms is pyrolyzed in an inert or ammonia-containing atmosphere at temperatures between -200°C and +2000°C and subsequently calcined in an inert or ammonia-containing atmosphere at temperatures between 800°C and 2000°C.

**14.** Silicon boron carbide nitride ceramic obtainable by a process as claimed in claim 13,
**characterized in that**
N-Si-C-B-N structural units are present in the ceramic.

**15.** Ceramic as claimed in claim 14,
**characterized in that**
it is an amorphous ceramic.

**16.** Ceramic as claimed in claim 14 or 15,
**characterized in that**
it contains more than 93 % by weight of the elements N, Si, C and B.

**17.** Process for the production of a composite ceramic comprising at least one of the components SiC, $Si_3N_4$, BN, C and $B_4C$,
**characterized in that**
a silicon boron carbide nitride ceramic as claimed in one of the claims 14 to 16 is age-hardened at temperatures of more than 1400°C.

**18.** Composite ceramic obtainable by a process as claimed in claim 13 by crystallizing a silicon boron nitride ceramic as claimed in one of the claims 14 to 16,
**characterized in that**
SiC, $Si_3N_4$, BN, C or/and $B_4C$ are molecularly dispersed therein.

**19.** Composite ceramic as claimed in claim 18,
**characterized in that**

it is an at least partially crystalline ceramic.

**20.** Use of oligoborocarbosilazanes or polyborocarbosilazanes as claimed in claim 12, of silicon boron carbide nitride ceramics as claimed in claim 14 to 16 or of composite ceramics as claimed in claim 18 or 19 to produce ceramic powders, ceramic coatings, ceramic mouldings, ceramic foils, ceramic fibres or ceramic microstructures.

**21.** Process for producing a compound of formula (I)

$$(R)_3Si\text{-}C(R^1)(R^2)\text{-}B(R)_2$$

in which R in each case independently of one another represents a hydrocarbon with 1 to 20 C atoms, hydrogen, halogen, N(R')(R'') or O(R') where R' and R'' independently of one another denote hydrogen or a hydrocarbon with 1 to 20 C atoms and $R^1$ and $R^2$ denote hydrogen,
**characterized in that**
a silane of the general formula (VI)

$$(R)_3Si\text{-}C(R^1)(R^2)\text{-}X$$

in which X denotes hydrogen, halogen or silyl residues is reacted with a borane of the general formula (VII)

$$B\ (R)_3$$

in the presence of a suitable combination of catalyst, base and acid trap in which R in each case independently of one another represents a hydrocarbon with 1 to 20 C atoms, hydrogen, halogen, N(R')(R'') or O(R') where R' and R'' independently of one another denote hydrogen or a hydrocarbon with 1 to 20 C atoms.

**22.** Process for producing a compound of formula (I)

$$(R)_3Si - C\ (R^1)\ (R^2) - B\ (R)_2$$

in which R in each case independently of one another represents a hydrocarbon with 1 to 20 C atoms, hydrogen, halogen, N(R')(R'') or O(R') where R' and R'' independently of one another denote hydrogen or a hydrocarbon with 1 to 20 C atoms and $R^1$ and $R^2$ denote hydrogen,
**characterized in that**
a CH-acidic compound of the general formula (VIII)

$$(R)_3Si - C\ (R^1)\ (R^2) - H$$

is reacted in the presence of a suitable combination of catalyst, base and acid trap with a borane of the general formula (IX)

$$Y - B\ (R)_2$$

in which R is defined as above and Y represents halogen, NR'R'' or OR' where R' and R'' independently of one another denote hydrogen or a hydrocarbon with 1 to 20 C atoms.

**23.** Process as claimed in claim 21 or 22, wherein an inorganic ion exchanger or a zeolite is used as the acid trap.

**Revendications**

**1.** Procédé de préparation d'un composé de formule (I)

$$(R)_3Si\text{-}C(R^1)(R^2)\text{-}B(R)_2,$$

où R représente dans chaque cas indépendamment un hydrocarbure à 1 à 20 atomes de carbone, l'hydrogène, un halogène, NR'R" ou OR', où R' et R" représentent indépendamment l'un de l'autre l'hydrogène ou un hydrocarbure à 1 à 20 atomes de carbone et $R^1$ et $R^2$ représentent l'hydrogène, **caractérisé en ce que** l'on convertit un silane de formule générale (II)

$$(R)_3Si\text{-}C(R^1)(R^2)\text{-}X,$$

où X représente un halogène, avec un métal M à des températures inférieures à 50°C dans un solvant organique aprotique en un silane de formule générale (III)

$$(R)_3Si\text{-}C(R^1)(R^2)\text{-}M(X)_w,$$

où w = 0 quand M est un métal monovalent et où w est un nombre entier ≥1 correspondant aux degrés d'oxydation de M moins 1 quand M est un métal plurivalent,
puis l'on fait réagir le composé de formule générale (III) à des températures inférieures à 50°C avec un borane de formule générale

$$Y\text{-}B(R)_2$$

où R est défini comme ci-dessus et Y représente un halogène, NR'R" ou OR', où R' et R" représentent indépendamment l'un de l'autre l'hydrogène ou un hydrocarbure à 1 à 20 atomes de carbone.

**2.** Procédé selon la revendication 1 **caractérisé en ce qu'**un composé chlorométhylsilane de formule

$$(R)_3Si\text{-}CH_2Cl$$

où R peut avoir dans chaque cas indépendamment les significations indiquées dans la revendication 1, est soumis à une métallation dans une réaction de Grignard avec de la poudre de magnésium puis mis à réagir avec l'halogénoborane.

**3.** Procédé selon l'une des revendications 1 ou 2 **caractérisé en ce que** le silane de formule générale (III) est mis à réagir avec au moins un alkyloxychloroborane $XB(R^3)(R^{3'})$ où X représente Cl et $R^3$ et $R^{3'}$ représentent indépendamment l'un de l'autre un groupement $C_1$-$C_{20}$-alcoxy ou phényloxy.

**4.** Procédé de préparation d'un composé de formule générale (IV)

$$(R)_3Si\text{-}C(R^1)(R^2)\text{-}B(X)_2,$$

où $R^1$ et $R^2$ représentent chacun l'hydrogène et R représente dans chaque cas indépendamment l'hydrogène, un halogène, un groupement hydrocarboné à 1 à 20 atomes de carbone, un groupement N(R')(R") ou un groupement OR', où R" et R' représentent indépendamment l'un de l'autre l'hydrogène ou un groupement hydrocarboné à 1 à 20 atomes de carbone et X représente un halogène, **caractérisé en ce que** l'on fait réagir un composé de formule générale (V)

$$(R)_3Si\text{-}C(R^1)(R^2)\text{-}B(OR')(OR'')$$

avec un halogénure d'élément ou un halogénure d'acide organique.

**5.** Silylalkylborane moléculaire de formule générale (I)

$$(R)_3Si\text{-}C(R^1)(R^2)\text{-}B(R)_2,$$

où R représente dans chaque cas indépendamment l'hydrogène, un halogène, un groupement hydrocarboné à 1 à 20 atomes de carbone, N(R')(R") ou OR', où R' et R" représentent chacun indépendamment l'hydrogène ou un groupement hydrocarboné à 1 à 20 atomes de carbone et $R^1$ et $R^2$ représentent chacun l'hydrogène.

6. Silylalkylborane moléculaire selon la revendication 5 **caractérisé en ce qu'**au moins l'un des groupements R représente méthyle et/ou Cl.

7. Silylalkylborazine de formule (X)

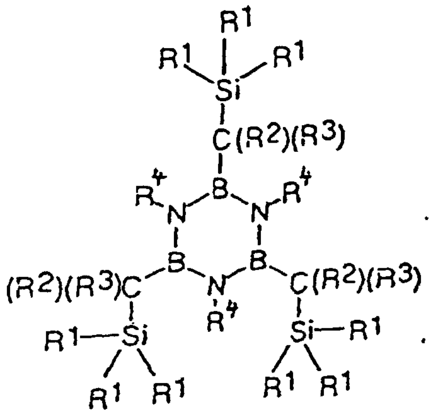

où $R^1$ représente à chaque fois indépendamment des autres l'hydrogène, un halogène, un groupement hydrocarboné à 1 à 20 atomes de carbone, N(R')(R") ou OR', où R' et R" représentent à chaque fois indépendamment l'hydrogène ou un groupement hydrocarboné à 1 à 20 atomes de carbone, et $R^2$ et $R^3$ représentent à chaque fois l'hydrogène et $R^4$ représente à chaque fois indépendamment des autres l'hydrogène, un halogène, N(R')(R") ou OR', où R' et R" représentent à chaque fois indépendamment l'hydrogène ou un groupement hydrocarboné à 1 à 20 atomes de carbone, ou $Sn(R^*)_3$ ou $Si(R^*)_3$ où R* représente à chaque fois indépendamment l'hydrogène, un halogène, N(R')(R"), OR' ou un groupement hydrocarboné à 1 à 20 atomes de carbone.

8. Procédé de préparation d'une silylalkylborazine selon la revendication 7 **caractérisé en ce que** l'on fait réagir un silylalkylborane de formule (I) comme défini dans l'une des revendications 5 ou 6, avec une amine $N(R^4)_3$ ou un sel d'ammonium $HN(R^4)_3^+$ où $R^4$ a la signification indiquée dans la revendication 7 et $A^-$ représente un anion.

9. Procédé de préparation d'une silylalkylborazine selon la revendication 7 **caractérisé en ce que** l'on fait réagir une borazine de formule (XI)

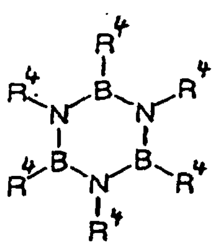

où $R^4$ représente dans chaque cas indépendamment des autres l'hydrogène, un halogène, N(R')(R"), OR', où R' et R" représentent dans chaque cas indépendamment l'hydrogène ou un groupement hydrocarboné à 1 à 20 atomes de carbone, $Sn(R^*)_3$ ou $Si(R^*)_3$, où R* a dans chaque cas les mêmes significations que pour R dans la revendication 1 en présence d'une combinaison appropriée de catalyseur, de base et de piégeur d'acide, avec des silanes de formule (III) comme indiqué dans la revendication 1 ou avec des silanes du type

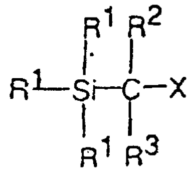

où $R^1$ représente dans chaque cas indépendamment des autres l'hydrogène, un halogène, un groupement hydrocarboné à 1 à 20 atomes de carbone, N(R')(R") ou OR', où R' et R" représentent à chaque fois indépendamment l'hydrogène ou un groupement hydrocarboné à 1 à 20 atomes de carbone, et $R^2$ et $R^3$ représentent chacun l'hydrogène.

**10.** Procédé de préparation d'un oligo- ou polyborocarbosilazane **caractérisé en ce que** l'on fait réagir un composé de formule (I) selon l'une des revendications 5 ou 6, où R' et R" sont définis comme dans la revendication 5 ou un composé de formule (X) selon la revendication 7 comme précurseur à un composant dans une réaction de polymérisation ou de polycondensation à des températures entre -100°C et 500°C.

**11.** Procédé de préparation d'un oligo- ou polyborocarbosilazane **caractérisé en ce que** l'on fait réagir un silylalkylborane, pouvant être obtenu par un procédé selon l'une des revendications 1 à 4, ou un silylalkylborane selon l'une des revendications 5 ou 6 ou une silylalkylborazine selon la revendication 7 avec un composé R'R"NH où R', R" représentent dans chaque cas indépendamment l'hydrogène ou un groupement hydrocarboné à 1 à 20 atomes de carbone, à des températures de -100°C à 300°C.

**12.** Oligo- ou polyborocarbosilazane ayant la caractéristique structurale Si-C-B(N)-N qui peut être obtenu par un procédé selon la revendication 10 ou 11.

**13.** Procédé de préparation d'une céramique de carbonitrure de silicium et de bore **caractérisé en ce que** l'on pyrolyse un oligo- ou polyborocarbosilazane selon la revendication 12 ou un silylalkylborane de formule (I), pouvant être obtenu par un procédé selon l'une des revendications 1 à 4 ou une silylalkylborazine de formule

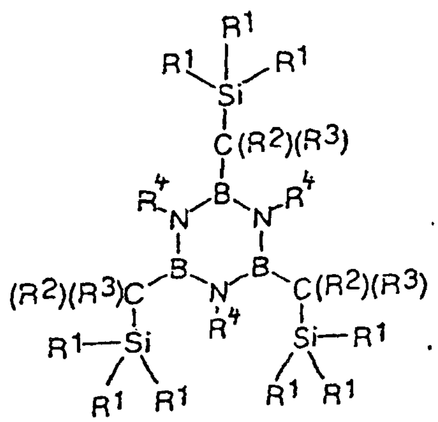

où $R^1$ représente dans chaque cas indépendamment des autres l'hydrogène, un halogène, un groupement hydrocarboné à 1 à 20 atomes de carbone, N(R')(R") ou OR', où R' et R" représentent à chaque fois indépendamment l'hydrogène ou un groupement hydrocarboné à 1 à 20 atomes de carbone, et $R^2$ et $R^3$ représentent dans chaque cas l'hydrogène et $R^4$ représente $R^1$, $Sn(R^*)_3$ ou $Si(R^*)_3$, où R* représente dans chaque cas indépendamment $R^2$ ou un groupement hydrocarboné à 1 à 20 atomes de carbone, dans une atmosphère inerte ou contenant de l'ammoniac à des températures entre -200°C et +2000°C puis calcine dans une atmosphère inerte ou contenant de l'ammoniac à des températures entre 800°C et 2000°C.

**14.** Céramique de carbonitrure de silicium et de bore pouvant être obtenue par un procédé selon la revendication 13 **caractérisée en ce que** des unités structurales N-Si-C-B-N sont présentes dans la céramique.

**15.** Céramique selon la revendication 14 **caractérisée en ce qu'**il s'agit d'une céramique amorphe.

**16.** Céramique selon la revendication 14 ou 15 **caractérisée en ce que** les éléments N, Si, C et B sont contenus à raison de plus de 93 % en masse.

**17.** Procédé de préparation d'une céramique composite à partir d'au moins l'un des composants SiC, $Si_3N_4$, BN, C et $B_4C$, **caractérisé en ce que** l'on précipite une céramique de carbonitrure de silicium et de bore selon l'une des revendications 14 à 16 à des températures supérieures à 1400°C.

**18.** Céramique composite pouvant être obtenue par un procédé selon la revendication 13 par cristallisation d'une céramique de carbonitrure de silicium et de bore selon l'une des revendications 14 à 16 **caractérisée en ce que** SiC, $Si_3N_4$, BN, C et/ou $B_4C$ sont présents en répartition dispersée à l'échelle moléculaire.

**19.** Céramique composite selon la revendication 18 **caractérisée en ce qu'**il s'agit d'une céramique au moins partiellement cristalline.

**20.** Utilisation d'oligo- ou polyborocarbosilazanes selon la revendication 12, de céramiques de carbonitrure de silicium et de bore selon les revendications 14 à 16 ou de céramiques composites selon la revendication 18 ou 19 pour la préparation de poudres céramiques, de revêtements céramiques, de corps mis en forme céramiques, de feuilles céramiques, de fibres céramiques ou de microstructures céramiques.

**21.** Procédé de préparation d'un composé de formule (I)

$$(R)_3Si\text{-}C(R^1)(R^2)\text{-}B(R)_2,$$

où R représente dans chaque cas indépendamment des autres un hydrocarbure à 1 à 20 atomes de carbone, l'hydrogène, un halogène, N(R')(R") ou O(R'), où R' et R" représentent indépendamment l'un de l'autre l'hydrogène ou un hydrocarbure à 1 à 20 atomes de carbone et $R^1$ et $R^2$ représentent l'hydrogène, **caractérisé en ce que** l'on fait réagir un silane de formule générale (VI)

$$(R)_3Si\text{-}C(R^1)(R^2)\text{-}X,$$

où X représente l'hydrogène, un halogène ou des groupements silyle, avec un borane de formule générale (VII)

$$B(R)_3$$

en présence d'une combinaison appropriée de catalyseur, de base et de piégeur d'acide, où R représente dans chaque cas indépendamment des autres un hydrocarbure à 1 à 20 atomes de carbone, l'hydrogène, un halogène, N(R')(R") ou O(R'), où R' et R" représentent indépendamment l'un de l'autre l'hydrogène ou un hydrocarbure à 1 à 20 atomes de carbone.

**22.** Procédé de préparation d'un composé de formule (I)

$$(R)_3Si\text{-}C(R^1)(R^2)\text{-}B(R)_2,$$

où R représente dans chaque cas indépendamment des autres un hydrocarbure à 1 à 20 atomes de carbone, l'hydrogène, un halogène, N(R')(R") ou O(R'), où R' et R" représentent indépendamment l'un de l'autre l'hydrogène ou un hydrocarbure à 1 à 20 atomes de carbone et $R^1$ et $R^2$ représentent l'hydrogène, **caractérisé en ce que** l'on fait réagir un composé CH-acide de formule générale (VIII)

$$(R)_3Si\text{-}C(R^1)(R^2)\text{-}H$$

en présence d'une combinaison appropriée de catalyseur, de base et de piégeur d'acide avec un borane de formule générale (IX)

$$Y\text{-}B(R)_2$$

où R est défini comme ci-dessus et Y représente un halogène, NR'R" ou OR', où R' et R" représentent indépendamment l'un de l'autre l'hydrogène ou un hydrocarbure à 1 à 20 atomes de carbone.

**23.** Procédé selon la revendication 21 ou 22 où un échangeur d'ions inorganique ou une zéolite est utilisé comme piégeur d'acide.